# EUROPEAN PATENT SPECIFICATION

(11) **EP 4 439 405 B1**
(45) Date of publication and mention of the grant of the patent: **17.06.2026**
(21) Application number: 24167248.4
(22) Date of filing: 28.03.2024
(51) Int. Cl.: G06N 7/01, G06N 20/00

(54) **DATA PROCESSING METHOD, DEVICE AND STORAGE MEDIUM**
DATENVERARBEITUNGSVERFAHREN, VORRICHTUNG UND SPEICHERMEDIUM
PROCÉDÉ DE TRAITEMENT DE DONNÉES, DISPOSITIF ET SUPPORT DE STOCKAGE

(30) Priority: 28.03.2023 CN 202310315396
(43) Date of publication of application: 02.10.2024
(73) Proprietor: Beijing Volcano Engine Technology Co., Ltd., Beijing 100190 (CN)
(72) Inventor: XU, Li, Beijing, 100028 (CN)
(74) Representative: Marks & Clerk LLP

(56) References cited:
- US-A1- 2017 364 819
- CHEN WEI ET AL: "CCSL: A Causal Structure Learning Method from Multiple Unknown Environments", ARXIV (CORNELL UNIVERSITY), 6 February 2023 (2023-02-06), XP093195170, Retrieved from the Internet <URL:https://arxiv.org/pdf/2111.09666> [retrieved on 20240814], DOI: 10.48550/arxiv.2111.09666
- ANDRÉ FUJITA ET AL: "Functional clustering of time series gene expression data by Granger causality", BMC SYSTEMS BIOLOGY, BIOMED CENTRAL LTD, LO, vol. 6, no. 1, 30 October 2012 (2012-10-30), pages 137, XP021140143, ISSN: 1752-0509, DOI: 10.1186/1752-0509-6-137
- ANONYMOUS: "Causal Inference with Bayesian Networks. Main Concepts and Methods", 4 March 2023 (2023-03-04), XP093195553, Retrieved from the Internet <URL:https://causalnex.readthedocs.io/en/latest/04_user_guide/04_user_guide.html> [retrieved on 20240815]
- CHANG GONG ET AL: "Causal Discovery from Temporal Data: An Overview and New Perspectives", ARXIV.ORG, CORNELL UNIVERSITY LIBRARY, 201 OLIN LIBRARY CORNELL UNIVERSITY ITHACA, NY 14853, 17 March 2023 (2023-03-17), XP091464648
- AYUSH DUSIA ET AL: "Recent Advances in Fault Localization in Computer Networks", IEEE COMMUNICATIONS SURVEYS & TUTORIALS, 18 May 2016 (2016-05-18), New York, pages 3030 - 3051, XP055523886, Retrieved from the Internet <URL:https://ieeexplore.ieee.org/ielx7/9739/7748587/07471418.pdf?tp=&arnumber=7471418&isnumber=7748587> [retrieved on 20181114], DOI: 10.1109/COMST.2016.2570599
- DIMITROVA ELENA S. ET AL: "Discretization of Time Series Data", JOURNAL OF COMPUTATIONAL BIOLOGY., 1 June 2010 (2010-06-01), US, pages 853 - 868, XP093279996, ISSN: 1066-5277, Retrieved from the Internet <URL:https://pmc.ncbi.nlm.nih.gov/articles/PMC3203514/pdf/cmb.2008.0023.pdf> [retrieved on 20250522], DOI: 10.1089/cmb.2008.0023
- WARREN LIAO ET AL: "Clustering of time series data-a survey", PATTERN RECOGNITION, ELSEVIER, GB, vol. 38, no. 11, 1 November 2005 (2005-11-01), pages 1857 - 1874, XP027610890, ISSN: 0031-3203, [retrieved on 20051101]

## Description

### TECHNICAL FIELD

Embodiments of the present disclosure relate to the field of computer and network communication technologies, and in particular, to a data processing method, device and storage medium.

### BACKGROUND

Causal relationship identification is a challenging relationship identification task in natural language processing and has attracted increasing attention in the field of natural language processing.

In existing technologies, a Granger causality model is usually used to discover causal characteristics of time series data to reveal the Granger causal relationship behind multivariate time series data. However, the Granger causality model usually can only be used to detect the causal relationship between two indicators. When facing high-dimensional time series data of multiple indicators, it has high calculation cost and limited processing power.

CCSL: A Causal Structure Learning Method from Multiple Unknown Environments, by CHEN, Wei et al, discloses causal structure learning for exploring the data generation mechanism. Functional Clustering of Time Series Gene Expression Data by Granger Causality, by André FUJITA et al, discloses Granger causality for sets of times series. Causal Discovery from Temporal Data - An Overview and New Perspectives, by GONG, Chang et al, discloses causal discovery specifying the correlation between the two categories. US 2017/364819 A1 discloses a method for fa ult-root-cause analysis in communication networks that first categorises indicators into discrete groups and then uses association-rule learning on historical data to estimate the conditional probabilities. The learned relationships are stored in a probabilistic network structure that enables inference for real-time root-cause determination.

### SUMMARY

Embodiments of the present disclosure provide a data processing method, device and storage medium to reduce the cost and improve efficiency for discovering causal relationships of high-dimensional time series data of multiple indicators.

In a first aspect, an embodiment of the present disclosure provides a data processing method implemented by an electronic device as defined in appended claim 1.

In a second aspect, an embodiment of the present disclosure provides a data processing device as defined in appended claim 7.

An embodiment of the present disclosure provides an electronic device, comprising: at least one processor and a memory;
the memory having computer executable instructions stored thereon;
the at least one processor executing the computer executable instructions stored in the memory, causing the at least one processor to execute the data processing method according to the above first aspect and various possible designs of the first aspect.

In a third aspect, an embodiment of the present disclosure provides a computer-readable storage medium having computer executable instructions stored thereon, which, when executed by a processor, implement the data processing method according to the above first aspect and various possible designs of the first aspect.

In a fourth aspect, an embodiment of the present disclosure provides a computer program product including computer executable instructions, which, when executed by a processor, implement the data processing method according to the above first aspect and various possible designs of the first aspect.

### BRIEF DESCRIPTION OF THE DRAWINGS

In order to more clearly illustrate the embodiments of the present disclosure or technical solutions in the related art, a brief introduction will be made below to the drawings that need to be used in the description of the embodiments or the related art. Obviously, the drawings in the following description are some embodiments of the present disclosure. For those of ordinary skill in the art, other drawings can be obtained in view of these drawings without exerting any creative effort.
FIG. 1 is a scene example diagram of a data processing method provided by an embodiment of the present disclosure;
FIG. 2 is a schematic flow chart of a data processing method provided by an embodiment of the present disclosure;
FIG. 3 is a schematic flowchart of a data processing method provided by another embodiment of the present disclosure;
FIG. 4 is a schematic diagram of a system architecture of a data processing method provided by an embodiment of the present disclosure;
FIG. 5 is a structural block diagram of a data processing device provided by an embodiment of the present disclosure;
FIG. 6 is a structural block diagram of a data processing device provided by another embodiment of the present disclosure;
FIG. 7 is a schematic diagram of a hardware structure of an electronic device provided by an embodiment of the present disclosure.

### DETAILED DESCRIPTION

In order to make the purpose, technical solutions and advantages of the embodiments of the present disclosure clearer, the technical solutions in the embodiments of the present disclosure will be clearly and completely described below in conjunction with the drawings in the embodiments of the present disclosure. Obviously, the embodiments described are part, not all, of the embodiments of the present disclosure.

In existing technologies, a Granger causality model is usually used to discover causal characteristics of time series data to reveal the Granger causal relationship behind multivariate time series data. However, the Granger causality model usually can only be used to detect the causal relationship between two indicators. When facing high-dimensional time series data of multiple indicators, it has high calculation cost and limited processing power.

In order to solve the above technical problems, the present disclosure provides a data processing method, by means of obtaining time series data of multiple indicators for which causal relationship is to be analyzed; clustering the multiple indicators according to probability distributions of the time series data of the multiple indicators, wherein indicators of the same category are indicators independent and identically distributed; analyzing causal connection relationships and connection directions between each of the indicators based on clustering result, and constructing a causal relationship network structure, the causal relationship network structure including indicator nodes and directed edges connecting the indicator nodes, the directed edges being used to represent causal relationships between connected indicator nodes; obtaining conditional probability tables of each of the indicator nodes in the causal relationship network structure according to the time series data of the multiple indicators; and obtaining Bayes Belief Networks, according to the causal relationship network structure and the conditional probability tables of each of the indicator nodes, to represent the causal relationships between each of the indicators. The present disclosure can perform causal relationship discovery on high-dimensional time series data of multiple indicators, greatly improve dimensions of the time series data that can be processed in the causal relationship discovery process, expand applicable scenarios for causal relationship discovery, and reduce computing costs through dimensionality reduction by clustering, improve the efficiency of causal relationship discovery, and provide auxiliary information support for fault root cause location in application scenarios of network services.

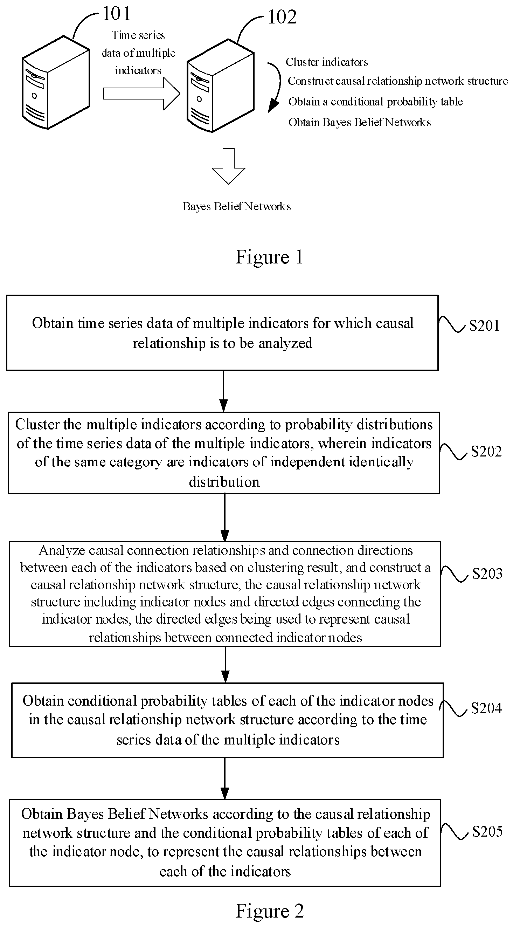

The present disclosure provides a data processing method applicable for the application scenario shown in FIG. 1, including a data collection system 101 and a data processing device 102, wherein the data collection system 101 can obtain time series data of multiple indicators for which causal relationship is to be analyzed, and send it to the data processing device 102 for executing the data processing method described above, and finally obtaining Bayes Belief Networks to represent the causal relationships between each of the indicators.

The data processing method of the present disclosure will be introduced in detail below with reference to specific embodiments.

Referring to FIG. 2, which is a schematic flowchart of a data processing method provided by an embodiment of the present disclosure. The method of this embodiment can be applied in terminal devices or servers. The data processing method comprises:
S201. obtaining time series data of multiple indicators for which causal relationship is to be analyzed.

In this embodiment, the multiple indicators for which causal relationship is to be analyzed can be determined according to specific application scenarios, for example, causal relationships of indicators such as user concurrency of a network service, memory usage of a server, CPU usage etc, then obtaining time series data of the user concurrency of the network service, the memory usage of the server, and the CPU usage respectively. Optionally, time series data of multiple indicators can be obtained from a third-party data collection system.

S202. clustering the multiple indicators according to probability distributions of the time series data of the multiple indicators, wherein indicators of the same category are indicators independent and identically distributed.

In this embodiment, since the multiple indicators may be massive indicators, in order to eliminate indicators with no causal correlation or weak correlation from the multiple indicators and find a set of indicators with strong correlation, the multiple indicators can be clustered according to the time series data of the multiple indicators, in which indicators of the same category are indicators Independent and Identically Distributed (i.i.d), that is, clustering is performed according to probability distributions of the indicators. For example, indicators with normal distribution are clustered into one category, and indicators with beta distribution are clustered into one category. Indicators with the same or similar probability distributions have a strong correlation and may have a causal relationship, while indicators with different or dissimilar probability distributions have a weak correlation and may not have a causal relationship.

Optionally, in this embodiment, any clustering algorithm can be used to cluster the multiple indicators. Among the clustering algorithms, commonly used clustering algorithms can be divided into Hierarchical clustering methods (also called hierarchical-based clustering) and Partition clustering methods (also called partition-based clustering algorithms), wherein the hierarchical clustering algorithm reveals hierarchical structure of data, and forms a tree-shaped clustering structure by dividing at different levels; the partition clustering algorithm divides multiple object sets into different categories that are mutually exclusive, each object belonging to and only belonging to one category; in this embodiment, a partition clustering algorithm can be used, the principle of which is to calculate distances between each of the indicator (usually using Euclidean distance, Dynamic Time Warping, etc.) based on time series data of the multiple indicators, and divide the indicators into multiple sets according to the distances. The clustering result can be represented and stored using an adjacency matrix including correlation coefficients between each of the indicators, which represents the correlations between each of the indicators on the probability distribution. According to the adjacency matrix, it can be determined whether any two indicators belong to the same category.

Optionally, the clustering algorithms in this embodiment include Kmeans, DBSCAN, and OPTICS, which are all based on the maximum attainable density theory in principle.

Optionally, the clustering of multiple indicators in this embodiment belongs to high-dimensional data clustering. For high-dimensional data, a non-parametric Bayesian clustering method can be used, such as a Chinese Restaurant Process (CRP) based on the Dirichlet process and its derivative methods. The multiple indicators are clustered according to their time series data, and an adjacency matrix is output as the final result, which can quickly find similar correlations in the high-dimensional time series data.

S203. analyzing causal connection relationships and connection directions between each of the indicators based on the clustering result, and constructing a causal relationship network structure, the causal relationship network structure including indicator nodes and directed edges connecting the indicator nodes, the directed edges being used to represent causal relationships between connected indicator nodes.

In this embodiment, a score-based structure learning algorithm can be applied for learning of the causal relationship network structure. Specifically, based on the cluster analysis result, the causal connection relationships and connection directions between indicators can be analyzed, for example, through a conditional independence testing method (such as d/m-separation method) to find and verify the correlations between the indicators, and through a V-structure and Meek rules methods to determine the connection directions in the causal connection relationships between each of the indicators.

Furthermore, a causal relationship network structure is constructed according to the connection relationships and the connection directions by using the indicators as nodes, wherein the causal relationship network structure uses the indicators as nodes and the causal relationships as directed edges, wherein the causal relationship network structure can be Directed Acyclic Graph (DAG) or Maximal Ancestral Graph (MAG), in which the indicator nodes with connection relationships indicate existence of causal relationships between the indicators. The indicator nodes are connected by directed edges, while the connection direction indicates which indicator of the indicator nodes connected by the directed edge is the cause and which indicator is the effect.

S204. obtaining conditional probability tables of each of the indicator nodes in the causal relationship network structure according to the time series data of the multiple indicators.

In this embodiment, the indicator nodes in the causal relationship network structure indicate the existence of causal relationships through directed edge connections, but cannot indicate strength of the connection relationships. Therefore, the Conditional Probability Tables (CPTs) of each of the indicator nodes in the causal relationship network structure can be obtained, to facilitate subsequently indicating the strength of the connection relationships through the conditional probability.

Optionally, on the basis of the causal relationship network structure, the SimpleEstimator algorithm is executed to generate the conditional probability table (CPT) of each indicator node. Among the indicator nodes, for any indicator node that has a parent indicator node, the conditional probability of the indicator node when its parent indicator node takes each of the possible values is obtained, so as to obtain a conditional probability table of the indicator node; for any indicator node that does not have a parent indicator node, the conditional probability table of the indicator node is determined according to the probability distribution (prior probability distribution) of the indicator node.

S205. obtaining Bayes Belief Networks, according to the causal relationship network structure and the conditional probability tables of each of the indicator node, to represent the causal relationships between each of the indicators.

In this embodiment, after obtaining the causal relationship network structure and the conditional probability tables of each of the indicator nodes, Bayes Belief Networks (BBN) of the directed acyclic graph can be spliced based on the causal relationship network structure and the conditional probability table of each indicator node, to represent causal relationships between each of the indicators. The Bayes Belief Networks takes indicators as nodes, which are connected through directed edges, wherein the directed edges between nodes represent mutual relationships between the indicator nodes (pointing from the parent indicator node to its child indicator node), conditional probabilities are used to express relationship strengthes, and the prior probability is used for information expression for those with no parent node.

On the basis of the Bayes belief networks, the Most Probable Explanation (MPE) that satisfies inference conditions can be solved according to the inference conditions and prior knowledge. For example, the prior knowledge may include the relationship between any two indicators. For example, if the CPU usage increases by 2%, then the memory usage increases by 10%, and if the CPU usage increases by 4%, then the memory usage increases by 30%. Based on this prior knowledge and the Bayes belief networks, the Most Probable Explanation of memory usage and other indicators can be inferred if the CPU usage increases by 6%, thus providing auxiliary information support for fault root cause location.

The data processing method provided by this embodiment includes obtaining time series data of multiple indicators for which causal relationship is to be analyzed; clustering the multiple indicators according to probability distributions of the time series data of the multiple indicators, wherein indicators of the same category are indicators independent and identically distributed; analyzing causal connection relationships and connection directions between each of the indicators based on clustering result, and constructing a causal relationship network structure, the causal relationship network structure including indicator nodes and directed edges connecting the indicator nodes, the directed edges being used to represent causal relationships between connected indicator nodes; obtaining conditional probability tables of each of the indicator nodes in the causal relationship network structure according to the time series data of the multiple indicators; and obtaining Bayes belief networks according to the causal relationship network structure and the conditional probability tables of each of the indicator nodes, to represent the causal relationships between each of the indicators. The present embodiment can perform causal relationship discovery on high-dimensional time series data of multiple indicators, which expands applicable scenarios for causal relationship discovery, reduces computing costs, improves the efficiency of causal relationship discovery, and provides auxiliary information support for fault root cause location.

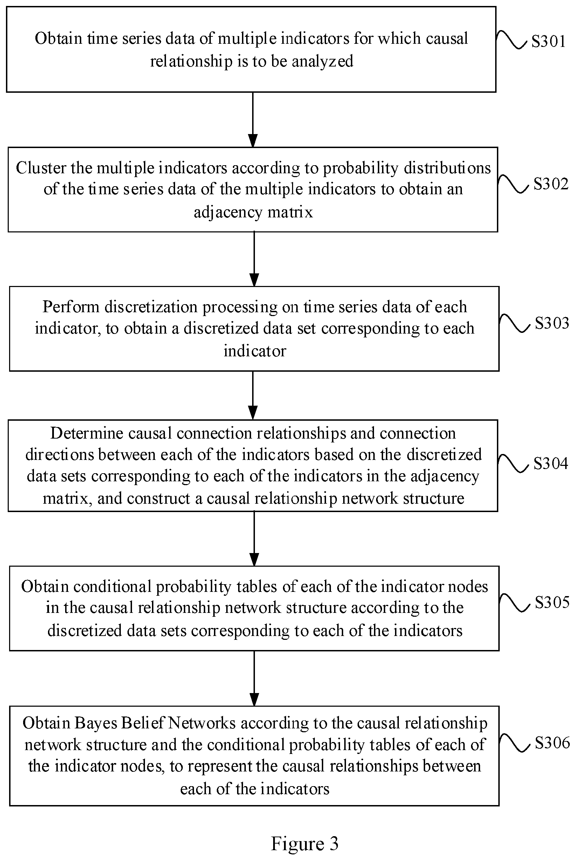

On the basis of the above embodiments, FIG. 3 is a schematic flowchart of a data processing method provided by an embodiment of the present disclosure. This data processing method comprises:
S301. obtaining time series data of multiple indicators for which causal relationship is to be analyzed.

In this embodiment, obtaining time series data of multiple indicators for which causal relationship is to be analyzed. This may refer to the above S201.

S302. clustering the multiple indicators according to probability distributions of the time series data of the multiple indicators to obtain an adjacency matrix.

In this embodiment, clustering the multiple indicators according to probability distributions of the time series data of the multiple indicators may refer to the above S202. Indicators with no causal correlation or weak correlation are eliminated, and indicators with strong correlation are found, so as to achieve dimension reduction, and the final clustering result is represented and stored in an adjacency matrix.

S303. performing discretization processing on time series data of each indicator, to obtain a discretized data set corresponding to each indicator.

In this embodiment, in view that the cost of constructing a causal relationship network structure by analyzing causal connections and connection directions between each of the indicators is very high, therefore, the time series data of each indicator can be discretized to reduce the cost of subsequent construction of a causal relationship network structure by analyzing causal connections and connection directions between each of the indicators. During the discretization process, since the time series data is continuous, different preset intervals can be configured for each indicator. For example, five preset intervals can be configured for a certain indicator, and the five preset intervals correspond to preset indicator values respectively. When the time series data of the indicator falls into one of the preset intervals, the time series data is replaced by the preset indicator value, thereby realizing discretization process to the time series data of the indicator and obtaining the discretized data sets of the indicators. Each indicator in the adjacency matrix undergoes the above discretization process to obtain a discretized data sets corresponding to each of the indicators in the adjacency matrix. In addition, a probability distribution of each indicator can be obtained according to the discretized data set corresponding to each indicator to provide support for the calculation of conditional probability tables.

S304. determining causal connection relationships and connection directions between each of the indicators based on the discretized data sets corresponding to each of the indicators in the adjacency matrix, and constructing a causal relationship network structure.

In this embodiment, on the basis of the discretized data sets corresponding to each of the indicator in the adjacency matrix, a causal structure discovery algorithm is used to determine the causal connection relationships and connection directions between each of the indicators, and construct a causal relationship network structure, which can greatly reduce costs and improve efficiency. The specific process may refer to S203.

Optionally, in this embodiment, a conditional independence testing method (such as the d/m-separation method) can be used to perform independence testing on each of the indicators in the adjacency matrix (an initial Acyclic Graph (DAG) or a Maximal Ancestral Graph (MAG) may be obtained according to the adjacency matrix), determine indicators of conditional independence of the Directed Acyclic Graph (DAG) or Maximal Ancestral Graph (MAG), and exclude the causal connection relationship between the indicators of conditional independence and other indicators, wherein, for the acyclic graph (DAG), the d-separation method can quickly determine whether two nodes are conditionally independent, and for the Maximal Ancestral Graph (MAG), the m-separation method can quickly determine whether two nodes are conditionally independent; and determine connection directions in causal connection relationships between each of the indicators according to the V-structure and Meek rules method, and finally obtain the directed acyclic graph (DAG) or the Maximal Ancestral Graph (MAG), which is determined as the causal relationship network structure.

S305. obtaining conditional probability tables of each of the indicator nodes in the causal relationship network structure according to the discretized data sets corresponding to each of the indicators.

In this embodiment, on the basis of the causal relationship network structure, the SimpleEstimator algorithm can be executed to generate the conditional probability tables (CPTs) of each of the indicator nodes. Among the indicator nodes, for any indicator node that has a parent indicator node, the conditional probability of the indicator node when its parent indicator node takes each of the possible values is obtained, to obtain conditional probability tables of the indicator node; for any indicator node that does not have a parent indicator node, the probability distribution (prior probability distribution) of the indicator node is obtained, and the conditional probability table of the indicator node is determined according to the probability distribution of the indicator node, wherein the probability distribution of the indicator node may be obtained according to the discretized data set corresponding to the indicator node.

S306. obtaining Bayes belief networks according to the causal relationship network structure and the conditional probability tables of each of the indicator nodes, to represent the causal relationships between each of the indicators.

In this embodiment, splicing the Bayes Belief Networks (BBN) of the directed acyclic graph may be referred to the above S205.

On the basis of any of the above embodiments, when analyzing causal connection relationships and connection directions between each of the indicators based on clustering result, and constructing a causal relationship network structure, in view that causal relationships between indicators may be synchronous, for example, in the same time window, indicator a fluctuates, and indicator b also fluctuates synchronously, in which case, causal connection relationships and connection directions between each of the indicators are analyzed based on time series data of each of the indicators in the same time window, constructing a causal relationship network structure, with each indicator corresponding to a node.

Specifically, when determining causal connection relationships and connection directions between each of the indicators based on the discretized data sets corresponding to each of the indicators in the adjacency matrix, and constructing a causal relationship network structure in S304, discrete data of each of the indicators in the adjacency matrix in the current time window may be first selected from the discretized data sets corresponding to each of the indicators to form first discretized data sets; the causal connection relationships and connection directions between each of the indicators are determined based on the first discretized data sets, and the causal relationship network structure is constructed.

In addition, there may also be a certain lag in the causal relationship between indicators. For example, indicator a fluctuates in the previous time window (t-1), and indicator b fluctuates just in the current time window (t), that is, there is a causal relationship between the indicator a in the previous time window (t-1) and the indicator b in the current time window (t). In this case, the causal connection relationships and connection directions between each of the indicators can be analyzed based on the time series data of each of the indicators in different time windows, and the causal relationship network structure is constructed, in which indicator analyzed in one time window corresponds to one node, while indicator analyzed in two time windows at the same time corresponds to two nodes, representing the indicator under the two time windows respectively.

Specifically, determining causal connection relationships and connection directions between each of the indicators based on the discretized data sets corresponding to each of the indicators in the adjacency matrix, and constructing a causal relationship network structure in S304, comprises:
selecting the discretized data of at least one first indicator(s) in the previous time window (t-1) from the discretized data sets corresponding to each of the indicators in the adjacency matrix to form second discretized data sets, and selecting the discretized data of at least one second indicators in the current time window (t) to form third discretized data sets; based on the second discretized data sets and the third discretized data sets, determining causal connection relationships and connection directions between each of the first indicator(s) in the previous time window (t-1) and each of the second indicator(s) in the current time window (t), and constructing a causal relationship network structure.

In this embodiment, the causal connection relationships and connection directions between each of the first indicators in the previous time window (t-1) and each of the second indicators in the current time window (t) can be analyzed through the above process, and in the constructed causal relationship network structure, the time window corresponding to each of the indicators may be identified. It should be noted that, if it is needed to analyze the causal connection relationships and connection directions between some indicators and other indicators in both of the previous time window (t-1) and the current time window (t), then the first indicators and the second indicators both include these indicators, that is, the first indicators and the second indicators in this embodiment may overlap. Through the causal structure discovery algorithm, the causal connection relationships and connection directions between the indicator and other indicators in the previous time window (t-1), as well as the causal connection relationships and connection directions between the indicator and other indicators in the current time window (t), can be analyzed. When constructing the causal relationship network structure, the indicator corresponds to two nodes, representing the indicator in the previous time window (t-1) and the indicator in the current time window (t) respectively, representing the causal connection relationships and connection directions between the indicator and other indicators in different time windows.

On the basis of any of the above embodiments, after obtaining the Bayes belief networks, it may further comprise:
S401. Obtaining inference conditions and prior knowledge of the relationship between any two of the indicators; wherein the inference conditions are values of part of the indicator nodes in the Bayes belief networks;
S402. obtaining the Most Probable Explanation that satisfies the inference conditions according to the prior knowledge and the Bayes belief networks, and determining values of another part of indicator nodes in the Bayes belief networks based on the Most Probable Explanation.

In this embodiment, at the stage of applying the Bayes belief networks, inference may be performed based on prior knowledge and the Bayes belief networks, wherein the inference condition can be that values of certain indicators are given. That is, given values of some indicators, values of other indicators are inferred based on the prior knowledge and the Bayes belief networks. For example, given a value of user concurrency of a network service (for example, the user concurrency increases by 3%) and the prior knowledge, which may be the known changing relationship between the server memory usage and the CPU usage (for example, if the memory usage increases by 4%, then the CPU usage increases by 2%), then it can be determined, based on the above prior knowledge and the Bayes belief networks, the Most Probable Explanation that satisfies the inference condition, that is, the predicted values of indicators such as server memory usage, CPU usage, and other indicators. Optionally, in this embodiment, the RPLoc algorithm may be used to infer and generate the Most Probable Explanation (MPE) based on the prior knowledge and Bayes Belief Networks.

Optionally, since the inference process takes a certain amount of time, the publish/subscribe (pub/sub) mode can be used to asynchronously obtain the Most Probable Explanation that satisfies inference conditions.

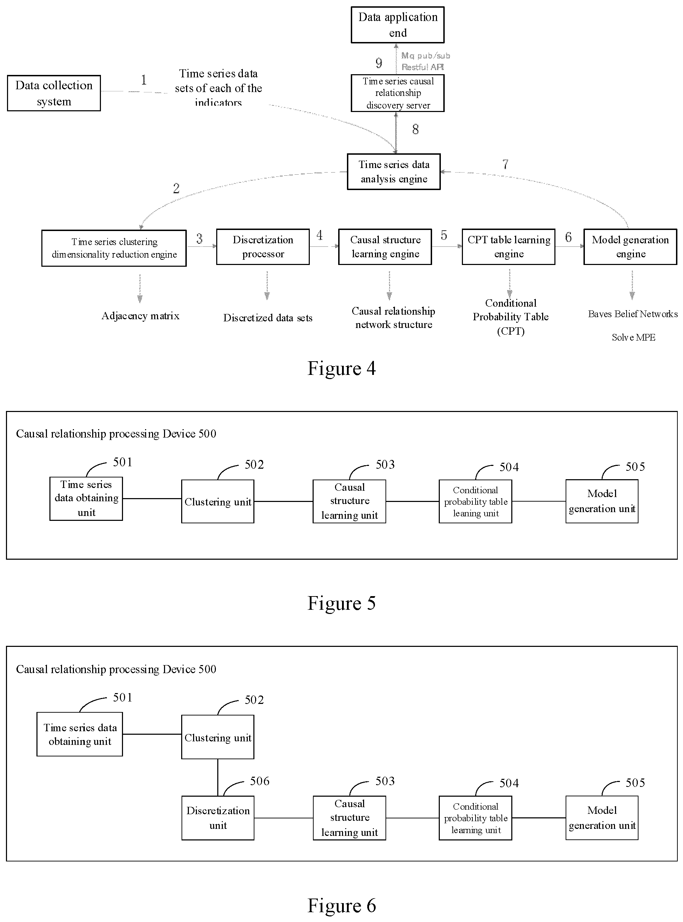

On the basis of any of the above embodiments, this embodiment further provides a data processing system architecture, as shown in FIG. 4. The system architecture includes a time series causal relationship discovery server, a time series data analysis engine, a time series clustering dimensionality reduction engine, a discretization processor, a causal structure learning engine, a CPT table learning engine and a model generation engine. Each part of the data processing system architecture can be arranged on the same server, or of course, can also be arranged on different servers. The time series data, the adjacency matrix, the discrete data sets, the causal relationship network structure, the conditional probability tables (CPTs), the Bayes belief networks, and the Most Probable Explanation (MPE) shown in FIG. 4 are only schematic diagrams.

Among the above components, the time series causal relationship discovery server: provides multiple ways of interaction (such as mq pub/sub asynchronous messaging or REStful API interface) for data applications, provides causal influence relationship retrieval and hypothesis condition reasoning services for the data application end, and may input reasoning conditions and prior knowledge of relationship between any two of the indicators by the time series causal relationship discovery server;
The time series data analysis engine: is used to interface with a third-party data collection system, receives a time series data set of each indicator, and creates a causal relationship discovery task according to a session request from the time series causal relationship discovery server;
The time series clustering dimensionality reduction engine: is used to receive the time-series data sets of each indicator of the causal relationship discovery task associated with the time series data analysis engine, executes a clustering dimensionality reduction algorithm, and outputs an adjacency matrix;
The discretization processor: is used to discretize the time series data sets corresponding to each of the indicators in the adjacency matrix according to specified parameters (preset interval) to obtain the discretized data sets corresponding to each of the indicators in the adjacency matrix;
The causal structure learning engine: executes a causal structure discovery algorithm and generates a causal relationship network structure based on the discretized data sets corresponding to each of the indicators in the adjacency matrix;
The CPT table learning engine: is used to execute the RPLoc algorithm to generate a conditional probability table (CPT) for each node in the causal relationship network structure based on the discretized data sets corresponding to each of the indicators in the adjacency matrix and the causal relationship network structure;
The model generation engine: is used to obtain the Bayes belief networks according to the causal relationship network structure and the conditional probability tables (CPTs) of each of the indicator nodes, can also be used to, according to inference conditions input by the time series causal relationship discovery server and prior knowledge, infer and generate the Most Probable Explanation (MPE), which is returned to the time series data analysis engine, through which in combination with the task, a final result set is generated and returned to the time series causal relationship discovery server, by which the final result set is then sent to the data application end that initiated the session.

Corresponding to the data processing method in the above embodiment, FIG. 5 is a structural block diagram of a data processing device provided by an embodiment of the present disclosure. For purposes of illustration, only parts related to the embodiments of the present disclosure are shown. Referring to FIG. 5, the data processing device 500 comprises: a time series data obtaining unit 501, a clustering unit 502, a causal structure learning unit 503, a conditional probability table learning unit 504, and a model generation unit 505.

Among these units, the time series data obtaining unit 501 is configured to obtain time series data of multiple indicators for which causal relationship is to be analyzed;
The clustering unit 502 is used to cluster the multiple indicators according to probability distributions of the time series data of the multiple indicators, wherein indicators of the same category are indicators independent and identically distributed;
The causal structure learning unit 503 is used to analyze causal connection relationships and connection directions between each of the indicators based on the clustering result, and construct a causal relationship network structure, the causal relationship network structure including indicator nodes and directed edges connecting the indicator nodes, the directed edges being used to represent causal relationships between connected indicator nodes;
The conditional probability table learning unit 504 is used to obtain conditional probability tables of each of the indicator nodes in the causal relationship network structure according to the time series data of the multiple indicators;
The model generation unit 505 is used to obtain Bayes belief networks according to the causal relationship network structure and the conditional probability tables of each of the indicator nodes, to represent the causal relationships between each of the indicators.

In one or more embodiments of the present disclosure, when the clustering unit 502 is clustering the multiple indicators according to the probability distributions of the time series data of the multiple indicators, the clustering unit 502 is used to:
obtain distances between each of the indicators according to the time series data of the multiple indicators, and determine the correlations between each of the indicator on the probability distribution according to the distances between the indicators, and obtain an adjacency matrix according to the correlations between each of the indicators, and use the adjacency matrix as the clustering result of the multiple indicators.

In one or more embodiments of the present disclosure, as shown in FIG. 6, the data processing device 500 further comprises a discretization unit 506 used to, after clustering the multiple indicators according to the probability distributions of the time series data of the multiple indicators, and before analyzing causal connection relationships and connection directions between each of the indicators based on the clustering result, discretize the time series data of each indicator to obtain a discretized data set corresponding to each indicator; the discretization unit 506 may also be used to obtain the probability distributions of each indicator according to the discretized data set corresponding to each indicator.

In one or more embodiments of the present disclosure, when the causal structure learning unit 503 is analyzing the causal connection relationships and connection directions between each of the indicators based on the clustering result, and constructing the causal relationship network structure, the causal structure learning unit 503 is used to:
determine the causal connection relationships and connection directions between each of the indicators based on the discretized data sets corresponding to each of the indicators in the adjacency matrix, and construct the causal relationship network structure.

In one or more embodiments of the present disclosure, when the causal structure learning unit 503 is determining the causal connection relationships and connection directions between each of the indicators, the causal structure learning unit 503 is used to:
perform independence test on each of the indicators in the adjacency matrix using a conditional independence testing method, to determine indicators of conditional independence and eliminate causal connection relationships between the indicators of conditional independence and other indicators, and determine connection directions in the causal connection relationships between each of the indicators according to the V-structure and Meek rules method to obtain a directed acyclic graph or a maximal ancestral graph, and determine the directed acyclic graph or the maximal ancestral graph as the causal relationship network structure.

In one or more embodiments of the present disclosure, when the causal structure learning unit 503 is determining the causal connection relationships and connection directions between each of the indicators according to the discretized data sets corresponding to each of the indicators in the adjacency matrix, and constructing the causal relationship network structure, the causal structure learning unit 503 is used to:
select, from the discretized data sets corresponding to each of the indicators in the adjacency matrix, first discretized data sets of each of the indicators in the current time window;
determine the causal connection relationships and connection directions between each of the indicators based on the first discretized data sets, and construct a causal relationship network structure.

In one or more embodiments of the present disclosure, when the causal structure learning unit 503 is determining the causal connection relationships and connection directions between each of the indicators based on the discretized data sets corresponding to each indicator in the adjacency matrix, and constructing the causal relationship network structure, the causal structure learning unit 503 is used to:
select, from the discretized data sets corresponding to each of the indicators in the adjacency matrix, second discretized data sets of at least one first indicators in the previous time window and third discretized data sets of at least one second indicators in the current time window;
determine, based on the second discretized data sets and the third discretized data sets, causal connection relationships and connection directions between each of the first indicators in the previous time window and each of the second indicators in the current time window, and construct a causal relationship network structure.

In one or more embodiments of the present disclosure, when the conditional probability table learning unit 504 is obtaining the conditional probability tables of each of the indicator nodes in the causal relationship network structure, the conditional probability table learning unit 504 is used to:
obtain, for any indicator node that has a parent indicator node, the conditional probability of the indicator node when its parent indicator node takes each of the possible values, to obtain a conditional probability table of the indicator node; or
obtain, for any indicator node that does not have a parent indicator node, the probability distribution of the indicator node, and determine the conditional probability table of the indicator node according to the probability distribution of the indicator node.

In one or more embodiments of the present disclosure, after the model generation unit 505 is obtaining the Bayes belief networks, the model generation unit 505 is further used to:
obtain inference conditions and prior knowledge of the relationship between any two of the indicators; wherein the inference conditions are the values of part of the indicator nodes in the Bayes belief networks;
obtain the Most Probable Explanation that satisfies the inference conditions according to the prior knowledge and the Bayes belief networks, and determine values of another part of the indicator nodes in the Bayes belief networks based on the Most Probable Explanation.

In one or more embodiments of the present disclosure, when the model generation unit 505 is obtaining the Most Probable Explanation that satisfies the inference conditions, the model generation unit 505 may obtain the Most Probable Explanation that satisfies the inference conditions asynchronously by using a publish/subscribe mode.

The device provided in this embodiment can be used to execute the technical solutions of the above method embodiments. Its implementation principles and technical effects are similar and will not be described again here in this embodiment.

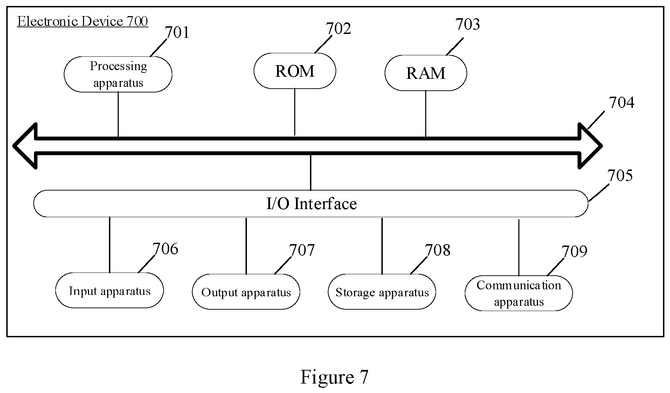

Referring to FIG. 7, which shows a schematic structural diagram of an electronic device 700 suitable for implementing an embodiment of the present disclosure. The electronic device 700 may be a terminal device or a server. Among them, the terminal device may include but not limited to a mobile terminal such as a mobile phone, a laptop, a digital broadcast receiver, a Personal Digital Assistant (PDA), a Portable Android Device (PAD), a Portable Media Player (PMP), a vehicle-mounted terminal (for example, a vehicle-mounted navigation terminal), etc., and a fixed terminal such as a digital TV, a desktop computer, etc. The electronic device shown in FIG. 7 is only one example and should not impose any limitations on functions and scope of use of the embodiments of the present disclosure.

As shown in FIG. 7, the electronic device 700 may include a processing apparatus (for example, a central processing unit, a graphics processor, etc.) 701, which may execute various appropriate actions and processes according to a program stored in a Read Only Memory (ROM) 702 or loaded from the storage apparatus 708 into the Random Access Memory (RAM) 703. In the RAM 703, various programs and data required for operations of the electronic device 700 are also stored. The processing apparatus 701, the ROM 702 and the RAM 703 are connected to each other via a bus 704. An input/output (I/O) interface 705 is also connected to bus 704.

Generally, the following apparatuses may be connected to the I/O interface 705: an input apparatus 706 including, for example, a touch screen, a touch pad, a keyboard, a mouse, a camera, a microphone, an accelerometer, a gyroscope, etc.; an output apparatus 707 including, for example, a Liquid Crystal Display (LCD), a speaker, a vibrator, etc.; a storage apparatus 708 including, for example, a magnetic tape, a hard disk, etc.; and a communication apparatus 709. The communication apparatus 709 may allow electronic device 700 to perform wireless or wired communication with other devices to exchange data. Although FIG. 7 shows an electronic device 700 having various apparatuses, it should be understood that implementation or availability of all illustrated apparatuses is not required. More or fewer apparatuses may be implemented or provided alternatively.

In particular, according to the embodiments of the present disclosure, the processes described above with reference to the flowcharts may be implemented as computer software programs. For example, an embodiment of the present disclosure includes a computer program product, which includes a computer program carried on a computer-readable medium, and the computer program contains program code for executing the method shown in the flowchart. In such embodiments, the computer program may be downloaded and installed from the network via the communication apparatus 709, or installed from storage apparatus 708, or installed from the ROM 702. When the computer program is executed by the processing apparatus 701, the above functions defined in the methods of the embodiment of the present disclosure are executed.

It should be noted that above computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of computer-readable storage media may include, but are not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program, and the program may be used by or in combination with an instruction execution system, apparatus, or device. In the present disclosure, a computer-readable signal medium may include a data signal propagated in a baseband or as a part of a carrier wave, in which a computer-readable program code is carried. This propagated data signal can take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program for use by or in combination with the instruction execution system, apparatus, or device. The program code contained on the computer-readable medium can be transmitted by any suitable medium, including but not limited to: electric wire, optical cable, RF (Radio Frequency), etc., or any suitable combinations thereof.

The above computer-readable medium may be included in above electronic devices; or it may exist alone without being assembled into the electronic devices.

The above computer-readable medium carries one or more programs thereon, which, when executed by the electronic device, cause the electronic device to perform the methods shown in the above embodiments.

The computer program code for performing the operations of the present disclosure can be written in one or more programming languages or a combination thereof. The above programming languages include object-oriented programming languages - such as Java, Smalltalk, C++, and also include conventional procedural programming languages - such as "C" language or similar programming languages. The program code can be executed entirely on a user's computer, partly executed on a user's computer, executed as an independent software package, partly executed on a user's computer and partly executed on a remote computer, or entirely executed on a remote computer or server. In the case of involving with a remote computer, the remote computer can be connected to a user's computer through any kind of network - including a Local Area Network (LAN) or a Wide Area Network (WAN), or it can be connected to an external computer (for example, connected via Internet provided by an Internet service provider).

The flowcharts and block diagrams in the accompanying drawings illustrate possible architecture, function, and operation implementations of a system, method, and computer program product according to various embodiments of the present disclosure. In this regard, each block in a flowchart or block diagram may represent a module, program segment, or part of code, which contains one or more executable instructions for realizing specified logic functions. It should also be noted that, in some alternative implementations, functions marked in a block may also occur in a different order than the order marked in the drawings. For example, two blocks shown in succession can actually be executed substantially in parallel, and they can sometimes be executed in the reverse order, depending on functions involved. It should also be noted that each block in a block diagram and/or flowchart, and the combination of blocks in a block diagram and/or flowchart, can be implemented by a dedicated hardware-based system that performs the specified functions or operations, or it can be implemented by a combination of dedicated hardware and computer instructions.

The units involved in the embodiments of the present disclosure can be implemented in software or hardware, wherein the name of the unit does not constitute a limitation on the unit itself under certain circumstances. For example, a first obtaining unit can also be described as "a unit that obtains at least two Internet Protocol addresses".

The functions described herein above may be performed at least in part by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logical device (CPLD) and so on.

In the context of the present disclosure, a machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of machine-readable storage media may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

## Claims

1. A data processing method implemented by an electronic device, the method comprising:
obtaining (S201) time series data of multiple indicators, for which causal relationship is to be analyzed, wherein the multiple indicators include at least two of user concurrency, a server memory usage, and CPU usage, of a network service;
clustering (S202) the multiple indicators according to probability distributions of the time series data of the multiple indicators, representing a clustering result of the multiple indicators using an adjacency matrix, which represents correlations between each of the indicators on the probability distribution, wherein indicators of the same category are indicators independent and identically distributed;
discretizing the time series data of each indicator to obtain a discretized data set corresponding to each indicator;
determining (S203) causal connection relationships and connection directions between each of the indicators based on the discretized data sets corresponding to each indicator in the adjacency matrix, and constructing a causal relationship network structure, the causal relationship network structure including indicator nodes and directed edges connecting the indicator nodes, the directed edges being used to represent causal relationships between the connected indicator nodes;
obtaining (S204) conditional probability tables of each of the indicator nodes in the causal relationship network structure according to the time series data of the multiple indicators;
obtaining (S205) Bayes Belief Networks, according to the causal relationship network structure and the conditional probability tables of each of the indicator nodes, to represent the causal relationships between each of the indicators, and provide auxiliary information support for fault root cause location in the network service based on the causal relationships between each of the indicators;
wherein the clustering the multiple indicators according to probability distributions of the time series data of the multiple indicators comprises:
obtaining distances between each of the indicators according to the time series data of the multiple indicators, determining the correlations between each of the indicators on the probability distribution according to the distances between the indicators, and obtaining the adjacency matrix according to the correlations between each of the indicators.

2. The method according to claim 1, wherein the determining the causal connection relationships and connection directions between each of the indicators comprises:
performing independence test on each of the indicator in the adjacency matrix using a conditional independence testing method, determining indicators with conditional independence and eliminating causal connection relationships between the indicators with conditional independence and other indicators, and determining connection directions in the causal connection relationships between each of the indicator according to V-Structure and Meek Rules method to obtain a directed acyclic graph or a maximal ancestral graph, and determining the directed acyclic graph or the maximal ancestral graph as the causal relationship network structure.

3. The method according to claim 2, wherein the determining the causal connection relationships and connection directions between each of the indicators based on the discretized data sets corresponding to each of the indicators in the adjacency matrix, and constructing a causal relationship network structure comprises:
selecting, from the discretized data sets corresponding to each of the indicators in the adjacency matrix, first discretized data sets of each of the indicators in the current time window;
determining the causal connection relationships and connection directions between each of the indicators based on the first discretized data sets, and constructing a causal relationship network structure.

4. The method according to claim 2, wherein the determining the causal connection relationships and connection directions between each of the indicators based on the discretized data sets corresponding to each of the indicators in the adjacency matrix, and constructing a causal relationship network structure comprises:
selecting, from the discretized data sets corresponding to each of the indicators in the adjacency matrix, second discretized data sets of at least one first indicators in the previous time window and third discretized data sets of at least one second indicators in the current time window;
determining, based on the second discretized data sets and the third discretized data sets, causal connection relationships and connection directions between each of the first indicators in the previous time window and each of the second indicators in the current time window, and constructing a causal relationship network structure.

5. The method according to any of claims 1-4, wherein the obtaining the conditional probability tables of each of the indicator nodes in the causal relationship network structure comprises:
obtaining, for any indicator node that has a parent indicator node, a conditional probability of the indicator node when its parent indicator node takes each of possible values, to obtain the conditional probability table of the indicator node; or
obtaining, for any indicator node that does not have a parent indicator node, the probability distribution of the indicator node, and determining the conditional probability table of the indicator node according to the probability distribution of the indicator node.

6. The method according to any of claims 1-5, further comprising: after the obtaining the Bayes Belief Networks,
obtaining inference conditions and prior knowledge of the relationships between any two indicators; wherein the inference conditions are the values of part of the indicator nodes in the Bayes Belief Networks;
obtaining the Most Probable Explanation that satisfies the inference conditions according to the prior knowledge and the Bayes Belief Networks, and determining values of another part of the indicator nodes in the Bayes Belief Networks based on the Most Probable Explanation.

7. A data processing device (500) comprising means configured to execute the method according to any one of claims 1-6.

8. A computer-readable storage having computer executable instructions stored thereon, which, when executed by a processor, cause the processor to implement the method of any one of claims 1-6.

9. A computer program product comprising computer executable instructions, which, when executed by a processor, cause the processor to implement the method of any one of claims 1-6.

## Patentansprüche

1. Datenverarbeitungsverfahren, das von einer elektronischen Vorrichtung implementiert wird, wobei das Verfahren umfasst:
Erhalten (S201) von Zeitreihendaten mehrerer Indikatoren, für die eine Kausalbeziehung analysiert werden soll, wobei die mehreren Indikatoren mindestens zwei von Benutzerkonkurrenz, Server-Speicherauslastung und CPU-Auslastung eines Netzwerkdienstes beinhalten;
Clustering (S202) der mehreren Indikatoren gemäß Wahrscheinlichkeitsverteilungen der Zeitreihendaten der mehreren Indikatoren, wobei ein Clustering-Ergebnis der mehreren Indikatoren unter Verwendung einer Adjazenzmatrix dargestellt wird, die die Korrelationen zwischen den einzelnen Indikatoren in der Wahrscheinlichkeitsverteilung darstellt, wobei Indikatoren derselben Kategorie unabhängige und identisch verteilte Indikatoren sind;
Diskretisieren der Zeitreihendaten jedes Indikators, um einen diskretisierten Datensatz zu erhalten, der jedem Indikator entspricht;
Ermitteln (S203) von Kausalverbindungsbeziehungen und Verbindungsrichtungen zwischen den einzelnen Indikatoren auf der Grundlage der diskretisierten Datensätze, die den einzelnen Indikatoren in der Adjazenzmatrix entsprechen, und Konstruieren einer Kausalnetzwerkstruktur, wobei die Kausalnetzwerkstruktur Indikatorknoten und gerichtete Kanten umfasst, die die Indikatorknoten verbinden, wobei die gerichteten Kanten zur Darstellung von Kausalbeziehungen zwischen den verbundenen Indikatorknoten verwendet werden;
Erhalten (S204) von Tabellen bedingter Wahrscheinlichkeiten für jeden der Indikatorknoten in der Kausalnetzwerkstruktur gemäß den Zeitreihendaten der mehreren Indikatoren;
Erhalten (S205) von Bayesschen Netzen, gemäß der Kausalnetzwerkstruktur und den Tabellen bedingter Wahrscheinlichkeiten jedes der Indikatorknoten, um die Kausalbeziehungen zwischen den einzelnen Indikatoren darzustellen, und Bereitstellen zusätzlicher Informationen zur Fehlerursachenortung im Netzwerkdienst auf der Grundlage der Kausalbeziehungen zwischen den einzelnen Indikatoren;
wobei das Clustering der mehreren Indikatoren gemäß Wahrscheinlichkeitsverteilungen der Zeitreihendaten der mehreren Indikatoren Folgendes umfasst:
Erhalten von Distanzen zwischen den einzelnen Indikatoren gemäß den Zeitreihendaten der mehreren Indikatoren, Ermitteln der Korrelationen zwischen den einzelnen Indikatoren auf der Wahrscheinlichkeitsverteilung gemäß den Distanzen zwischen den Indikatoren und Erhalten der Adjazenzmatrix gemäß den Korrelationen zwischen den einzelnen Indikatoren.

2. Verfahren nach Anspruch 1, wobei das Ermitteln der Kausalverbindungsbeziehungen und der Verbindungsrichtungen zwischen den einzelnen Indikatoren Folgendes umfasst:
Durchführen eines Unabhängigkeitstests für jeden Indikator in der Adjazenzmatrix mittels eines bedingten Unabhängigkeitstestverfahrens, Ermitteln von Indikatoren mit bedingter Unabhängigkeit und Eliminieren von Kausalverbindungsbeziehungen zwischen den Indikatoren mit bedingter Unabhängigkeit und anderen Indikatoren, und Ermitteln von Verbindungsrichtungen in den Kausalverbindungsbeziehungen zwischen den einzelnen Indikatoren gemäß einem V-Struktur- und Meek-Regel-Verfahren um einen gerichteten azyklischen Graphen oder einen maximalen Anzestralgraphen zu erhalten, und Ermitteln des gerichteten azyklischen Graphen oder des maximalen Anzestralgraphen als die Kausalnetzwerkstruktur.

3. Verfahren nach Anspruch 2, wobei das Ermitteln der Kausalverbindungsbeziehungen und der Verbindungsrichtungen zwischen den einzelnen Indikatoren auf der Grundlage der diskretisierten Datensätze, die den einzelnen Indikatoren in der Adjazenzmatrix entsprechen, und Konstruieren einer Kausalnetzwerkstruktur Folgendes umfasst:
Auswählen erster diskretisierter Datensätze jedes Indikators im aktuellen Zeitfenster aus den diskretisierten Datensätzen, die den einzelnen Indikatoren in der Adjazenzmatrix entsprechen;
Ermitteln der Kausalverbindungsbeziehungen und der Verbindungsrichtung zwischen den einzelnen Indikatoren auf Grundlage der ersten diskretisierten Datensätze und Konstruieren einer Kausalnetzwerkstruktur.

4. Verfahren nach Anspruch 2, wobei das Ermitteln der Kausalverbindungsbeziehungen und der Verbindungsrichtungen zwischen den einzelnen Indikatoren auf der Grundlage der diskretisierten Datensätze, die den einzelnen Indikatoren in der Adjazenzmatrix entsprechen, und Konstruieren einer Kausalnetzwerkstruktur Folgendes umfasst:
Auswählen zweiter diskretisierter Datensätze mindestens eines ersten Indikators im vorherigen Zeitfenster und dritter diskretisierter Datensätze mindestens eines zweiten Indikators im aktuellen Zeitfenster aus den diskretisierten Datensätzen, die den einzelnen Indikatoren in der Adjazenzmatrix entsprechen;
Ermitteln von Kausalverbindungsbeziehungen und Verbindungsrichtungen zwischen den einzelnen ersten Indikatoren im vorherigen Zeitfenster und den einzelnen zweiten Indikatoren im aktuellen Zeitfenster auf Grundlage der zweiten diskretisierten Datensätze und der dritten diskretisierten Datensätze und Konstruieren einer Kausalnetzwerkstruktur.

5. Verfahren nach einem der Ansprüche 1-4, wobei das Erhalten der Tabellen bedingter Wahrscheinlichkeiten jedes der Indikatorknoten in der Kausalnetzwerkstruktur Folgendes umfasst:
Erhalten einer bedingten Wahrscheinlichkeit für jeden Indikatorknoten, der einen übergeordneten Indikatorknoten aufweist, wenn sein übergeordneter Indikatorknoten jeden von möglichen Werten annimmt, um die Tabelle der bedingten Wahrscheinlichkeiten des Indikatorknotens zu erhalten; oder
Erhalten, für jeden Indikatorknoten, der keinen übergeordneten Indikatorknoten aufweist, der Wahrscheinlichkeitsverteilung des Indikatorknotens und Ermitteln der Tabelle bedingter Wahrscheinlichkeiten des Indikatorknotens gemäß der Wahrscheinlichkeitsverteilung des Indikatorknotens.

6. Verfahren nach einem der Ansprüche 1-5, ferner umfassend; nach dem Erhalten der Bayesschen Netze,
Erhalten von Inferenzbedingungen und Vorwissen über die Beziehungen zwischen je zwei Indikatoren; wobei die Inferenzbedingungen die Werte eines Teils der Indikatorknoten in den Bayesschen Netzen sind;
Erhalten der wahrscheinlichsten Erklärung, die die Inferenzbedingungen gemäß dem Vorwissen und den Bayesschen Netzen erfüllt, und Ermitteln von Werten eines anderen Teils der Indikatorknoten in den Bayesschen Netzen auf der Grundlage der wahrscheinlichsten Erklärung.

7. Datenverarbeitungsvorrichtung (500), die Mittel umfasst, die so konfiguriert sind, dass sie das Verfahren nach einem der Ansprüche 1-6 ausführen.

8. Computerlesbarer Speicher, der darauf gespeicherte ausführbare Anweisungen aufweist, die, wenn sie von einem Prozessor ausgeführt werden, den Prozessor veranlassen, das Verfahren nach einem der Ansprüche 1-6 zu implementieren.

9. Computerprogrammprodukt, das computerausführbare Anweisungen umfasst, die, wenn sie von einem Prozessor ausgeführt werden, den Prozessor veranlassen, das Verfahren nach einem der Ansprüche 1-6 zu implementieren.

## Revendications

1. Procédé de traitement vidéo mis en œuvre par un dispositif électronique, le procédé comprenant :
l'obtention (S201) de données de série temporelle de multiples indicateurs, pour lesquels une relation causale doit être analysée, dans lequel les multiples indicateurs incluent au moins deux parmi la simultanéité d'utilisateurs, l'utilisation de la mémoire du serveur et l'utilisation d'une CPU d'un service réseau ;
le regroupement (S202) des multiples indicateurs selon des distributions de probabilités des données de série temporelle des multiples indicateurs, représentant un résultat de regroupement des indicateurs multiples à l'aide d'une matrice d'adjacence, qui représente des corrélations entre chacun des indicateurs sur la distribution de probabilités, dans lequel des indicateurs de la même catégorie sont des indicateurs indépendants et distribués de manière identique ;
la discrétisation des données de série temporelle de chaque indicateur pour obtenir un ensemble de données discrétisées correspondant à chaque indicateur ;
la détermination (S203) de relations de connexion causales et de directions de connexion entre chacun des indicateurs sur la base des ensembles de données discrétisées correspondant à chaque indicateur dans la matrice d'adjacence, et la construction d'une structure de réseau de relations causales, la structure de réseau de relations causales incluant des nœuds d'indicateurs et des bords dirigés connectant les nœuds d'indicateurs, les bords dirigés étant utilisés pour représenter des relations causales entre les nœuds d'indicateurs connectés ;
l'obtention (S204) de tableaux de probabilités conditionnelles de chacun des nœuds d'indicateurs dans la structure du réseau de relations causales selon les données de série temporelle des multiples indicateurs ;
l'obtention (S205) des réseaux bayésiens de croyance, selon la structure du réseau de relations causales et les tables de probabilités conditionnelles de chacun des nœuds d'indicateurs, pour représenter les relations causales entre chacun des indicateurs et la fourniture d'un support d'informations auxiliaire pour une localisation de cause racine de panne dans le service réseau sur la base des relations causales entre chacun des indicateurs ;
dans lequel le regroupement des multiples indicateurs selon les distributions de probabilités des données de série temporelle des multiples indicateurs comprend :
l'obtention de distances entre chacun des indicateurs en fonction des données de série temporelle des multiples indicateurs, la détermination des corrélations entre chacun des indicateurs sur la distribution de probabilités sur la base des distances entre les indicateurs, et l'obtention de la matrice d'adjacence en fonction des corrélations entre chacun des indicateurs.

2. Procédé selon la revendication 1, dans lequel la détermination des relations de connexion causales et les directions de connexion entre chacun des indicateurs comprend :
la réalisation d'un test d'indépendance sur chacun de l'indicateur dans la matrice d'adjacence en utilisant un procédé de test d'indépendance conditionnelle, la détermination d'indicateurs avec une indépendance conditionnelle et l'élimination de relations de connexion causales entre les indicateurs avec l'indépendance conditionnelle et les autres indicateurs, et la détermination de directions de connexion dans les relations de connexion causales entre chacun de l'indicateur selon le procédé V-Structure et les règles de Meek pour obtenir un graphe acyclique orienté ou un graphe ancestral maximal, et la détermination du graphe acyclique dirigé ou du graphe ancestral maximal comme structure de réseau de relations causales.

3. Procédé selon la revendication 2, dans lequel la détermination des relations de connexion causales et des directions de connexion entre chacun des indicateurs, basée sur les ensembles de données discrétisées correspondant à chacun des indicateurs dans la matrice d'adjacence, et la construction d'une structure de réseau de relations causales comprennent :
la sélection, parmi les ensembles de données discrétisées correspondant à chacun des indicateurs dans la matrice d'adjacence, de premiers ensembles de données discrétisées de chacun des indicateurs dans la fenêtre temporelle actuelle ;
la détermination des relations de connexion causales et des directions de connexion entre chacun des indicateurs sur la base des premiers ensembles de données discrétisées, et la construction d'une structure de réseau de relations causales.

4. Procédé selon la revendication 2, dans lequel la détermination des relations de connexion causales et des directions de connexion entre chacun des indicateurs, basée sur les ensembles de données discrétisées correspondant à chacun des indicateurs dans la matrice d'adjacence, et la construction d'une structure de réseau de relations causales comprennent :
la sélection, à partir des ensembles de données discrétisées correspondant à chacun des indicateurs dans la matrice d'adjacence, de deuxièmes ensembles de données discrétisées d'au moins des premiers indicateurs dans la fenêtre temporelle précédente et des troisièmes ensembles de données discrétisées d'au moins des seconds indicateurs dans la fenêtre temporelle actuelle ;
la détermination, sur la base des deuxièmes et troisièmes ensembles de données discrétisées, de relations de connexion causale et des directions de connexion entre chacun des premiers indicateurs de la fenêtre temporelle précédente et chacun des deuxièmes indicateurs de la fenêtre temporelle actuelle, et construire une structure de réseau de relations causales.

5. Procédé selon l'une quelconque des revendications 1-4, dans lequel l'obtention des tables de probabilités conditionnelles de chacun des nœuds d'indicateurs de la structure du réseau de relations causales comprend :
l'obtention, pour tout nœud d'indicateur présentant un nœud d'indicateur parent, d'une probabilité conditionnelle du nœud d'indicateur lorsque son nœud d'indicateur parent prend chacune de valeurs possibles, afin d'obtenir la table de probabilités conditionnelles du nœud d'indicateur ; ou
l'obtention, pour tout nœud d'indicateur qui ne présente pas de nœud d'indicateur parent, de la distribution de probabilités du nœud d'indicateur, et la détermination du tableau de probabilités conditionnelles du nœud d'indicateur en fonction de la distribution de probabilités du nœud d'indicateur.

6. Procédé selon l'une quelconque des revendications 1-5, comprenant en outre, après l'obtention des réseaux bayésiens de croyance,
l'obtention de conditions d'inférence et de connaissances préalables sur les relations entre deux indicateurs quelconques ; dans lequel les conditions d'inférence sont les valeurs d'une partie des nœuds d'indicateurs dans les réseaux bayésiens de croyance ;
l'obtention de l'explication la plus probable qui satisfait aux conditions d'inférence selon les connaissances préalables et les réseaux bayésiens de croyance, et la détermination de valeurs d'une autre partie des nœuds d'indicateurs dans les réseaux bayésiens de croyance sur la base de l'explication la plus probable.

7. Dispositif de traitement de données (500) comprenant des moyens configurés pour exécuter le procédé selon l'une quelconque des revendications 1-6.

8. Support de stockage lisible par ordinateur, sur lequel sont stockées des instructions exécutables qui, lorsqu'elles sont exécutées par un processeur, amènent le processeur à mettre en œuvre le procédé selon l'une quelconque des revendications 1-6.

9. Produit de programme informatique comprenant des instructions exécutables par ordinateur qui, lorsqu'elles sont exécutées par un processeur, amènent le processeur à mettre en œuvre le procédé de l'une quelconque des revendications 1-6,
